# EUROPÄISCHE PATENTSCHRIFT

(11) **EP 1 159 670 B1**
(45) Veröffentlichungstag und Bekanntmachung des Hinweises auf die Patenterteilung: **18.09.2002**
(21) Anmeldenummer: 00920344.9
(22) Anmeldetag: 01.03.2000
(51) Int. Cl.: G06F 3/00

(54) **EINGABE-/AUSGABEVORRICHTUNG FÜR EIN BENUTZERENDGERÄT**
INPUT/OUTPUT DEVICE FOR A USER TERMINAL
DISPOSITIF D'ENTREE/SORTIE POUR TERMINAL UTILISATEUR

(30) Priorität: 09.03.1999 DE 19910348
(43) Veröffentlichungstag der Anmeldung: 05.12.2001
(73) Patentinhaber: SIEMENS AKTIENGESELLSCHAFT, 80333 München (DE)
(72) Erfinder: HOFMANN, Jürgen, D-85304 Ilmmünster (DE); MAYERLE, Wolfgang, D-85051 Ingolstadt (DE)
(86) Internationale Anmeldenummer: DE0000616
(87) Internationale Veröffentlichungsnummer: WO00054134

(56) Entgegenhaltungen:
- EP-A- 0 679 984
- EP-A- 0 816 980
- WO-A-93/14454
- GB-A- 2 281 838
- US-A- 5 734 421
- US-A- 5 790 099
- US-A- 5 844 544
- GRAF H G ET AL: "ELEKTRONISCH SEHEN ALTERNATIVE ZUR CCD-STRUKTUR BEWALTIGT HOHE HELLIGKEITSDYNAMIK" ELEKTRONIK,DE,FRANZIS VERLAG GMBH. MUNCHEN, Bd. 44, Nr. 3, 7. Februar 1995 (1995-02-07), Seiten 52-57, XP000495279 ISSN: 0013-5658

## Beschreibung

Die Erfindung betrifft eine Eingabe-/Ausgabevorrichtung für ein Benutzerendgerät wie etwa einen tragbaren Computer, ein Mobiltelefon oder eine Spielstation.

Die fortschreitende Miniaturisierung elektronischer Schaltungen und die zunehmende Verbreitung von Mobiltelefonen eröffnet neue Möglichkeiten der mobilen Datenkommunikation mittels kleiner und handlicher Endgeräte. Dabei stellt die Eingabe/Ausgabetechnologie ein Hindernis zur weiteren Miniaturisierung der Benutzerendgeräte dar.

Als Ausgabemedium sind Flüssigkristall- oder Polymere-Displays einsetzbar. In letzter Zeit wurden darüber hinaus sogenannte Mikrodisplays auf der Größe eines Fingernagels entwickelt. Diese Anzeigeeinrichtungen sind in der Lage, Bilder einer Auflösung von beispielsweise 800×600 Pixel darzustellen. Durch eine Linsenanordnung wird das Bild dann so vergrößert, dass sich ein für den Benutzer angenehmer Sehwinkel von beispielsweise 16° ergibt. Derartige Mikrodisplays sind beispielsweise in der Zeitschrift Funkschau Nr. 22/97, S. 70 bis S. 71, beschrieben.

Als Eingabemedium sind Tastatur, Maus, Trackball und ein Eingabestift (Pen) auf einem Eingabefeld bekannt. Mit Ausnahme des Trackballs haben alle der genannten Eingabemedien einen vergleichsweise großen Platzbedarf. Ein Trackball hat den Nachteil, daß er verschleißanfällig ist und dessen Bedienung ein hohes Maß an Konzentration des Benutzers erfordert. Die Spracheingabe und -steuerung eines Endgerätes ist noch Gegenstand intensiver Forschungsanstrengungen.

Bei der US 5,790,099 A wird zur Erfassung einer Augenbewegung Infrarotlicht von einer Infrarot-Lichtquelle abgestrahlt, über einen ersten Strahlteiler umgelenkt und über einen weiteren Strahlteiler nochmals umgelenkt, bevor er zur Beleuchtung auf ein Auge eines Benutzers trifft. Zur Erfassung der Augenbewegung Wird das von den jeweiligen unterschiedlich reflektierten Augenbereichen reflektierte Infrarotlicht über den Strahlteiler umgelenkt, bis der reflektierte Lichtstrahl den Strahlteiler erreicht. Hinter dem Strahlteiler ist ein als Infrarotsensor ausgebildete Augensensor angeordnet, welcher das durch den Strahlteiler hindurchtretende Licht erfasst und auswertet. Bei der US 5,790,099 A ist es also erforderlich, das von der Infrarotlichtquelle abgestrahlte Infrarotlicht zunächst über zwei Strahlteiler umzulenken, bevor es auf das Auge trifft. Das von dem Auge reflektierte Infrarotlicht muss dann vor Erreichen des Augensensors wiederum zwei Strahlteiler passieren. Es muss bei der US 5,790,099 A folglich einerseits hinreichend intensives Infrarotlicht von der Infrarot-Lichtquelle abgestrahlt werden, um das Auge zur Erfassung dessen Bewegung ausreichend zu beleuchten, andererseits jedoch darf die Intensität dieses Infrarotlichtes nicht so groß sein, um Beschädigungen des Auges zu vermeiden. Dieser Kompromiss lässt sich nur unter erheblichem Kostenaufwand realisieren, da das vom Auge reflektierte Infrarotlicht zwei Strahlteiler passieren muss und dabei so stark geschwächt wird, dass eine Erfassung der Augenbewegung mit dem Augensensor nur dann zufriedenstellend möglich ist, wenn der Augensensor mit sehr hoher Empfindlichkeit ausgebildet ist. Ein derartiger Augensensor ist jedoch kostenintensiv.

Die Druckschriften des Standes der Technik GB 2 281 838 A, EP 0 679 984 A1, WO 93/14454 und US 5,844,544 A beschreiben Eingabe-/Ausgabevorrichtungen für Benutzerendgeräte. Die in den Dokumenten gezeigten Vorrichtungen weisen jedoch höchstens einen Strahlteiler auf und nehmen somit den Kompromiss in Kauf, unzureichende Erfassungsergebnisse zu erhalten oder Komponenten zur Erfassung der Augenbewegung in dem Gesichtfeld des Benutzerauges für den Benutzer störend anzuordnen.

Der Erfindung liegt daher die Aufgabe zugrunde, eine Eingabe/Ausgabevorrichtung unter kostengünstiger Herstellung bereitzustellen, bei welcher trotz einer Beleuchtung eines Benutzerauges mit Infrarotlicht geringer Intensität eine zuverlässige und genaue Erfassung der Augenbewegung gewährleistet ist.

Gelöst wird die Aufgabe durch eine Eingabe-/Ausgabevorrichtung mit den Merkmalen des Anspruches 1. Da die Ansteuerung des Endgerätes durch die Augenbewegungen des Benutzers erfolgt, wird kein Platz für ein Eingabemedium wie eine Maus oder eine Tastatur benötigt. Außerdem kann der Benutzer das Endgerät intuitiv mit Augenbewegungen bedienen und hat so noch beide Hände frei.

Vorteilhafte Weiterbildungen der Erfindung sind in den Unteransprüchen beschrieben.

Die Erfassung der Augenbewegung erfolgt vorteilhaft mittels Infrarotlicht, da dieses einen größeren Kontrast der Augenstrukturen abbildet. Der Augensensor kann dabei eine CCD-Kamera oder eine CMOS-Kamera mit integrierter digitaler Signalverarbeitung sein.

Bei der Anzeigeeinrichtung kann es sich vorzugsweise.um miniaturisierte Bildschirme handeln, die mit einer Linsenanordnung zur Bilderzeugung versehen sind. Dabei können auch zwei Bildschirme nebeneinander auf einem brillenförmigen Trägergestell angeordnet seien, um so beispielsweise dreidimensional erscheinende Bilder darzustellen. Durch die erfasste Augenbewegung kann beispielsweise ein Bildschirmrollvorgang veranlasst werden oder bestimmte Funktionen eines lauffähigen Programmes gestartet oder beendet werden oder es kann die Betrachtungsperspektive des Benutzers in Abhängigkeit von der Augenbewegung nachgeführt werden. Dies ist insbesondere interessant für Multimedia-, virtuelle-Realität- oder Computerspiel-Anwendungen.

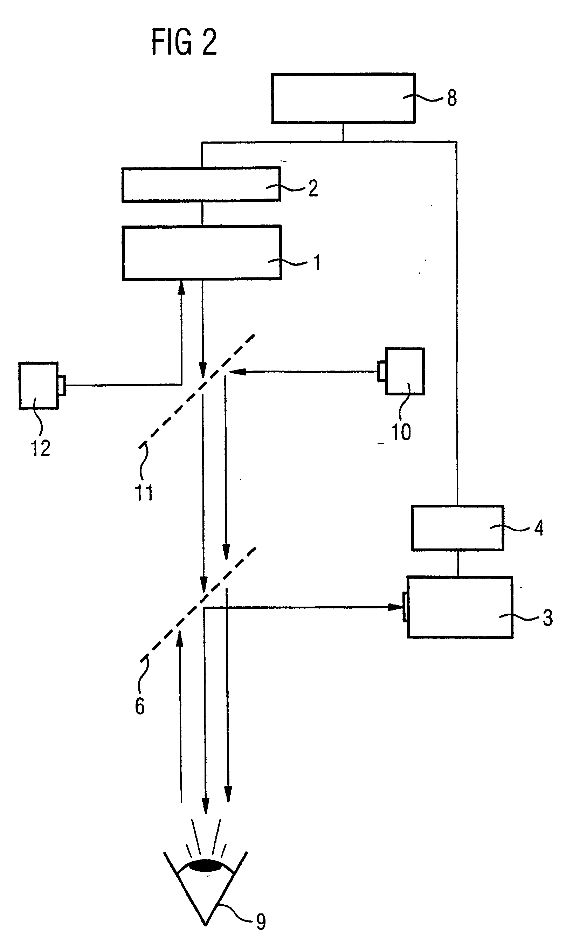

Die Erfindung wird in der folgenden Beschreibung anhand eines bevorzugten Ausführungsbeispiels gemäß Figur 2 unter Bezugnahme auf die beiliegenden Zeichnungen im Detail erläutert, in denen
Fig. 1 eine Eingabe-/Ausgabevorrichtung zeigt;
Fig. 2 ein Ausführungsbeispiel einer erfindungsgemäßen Eingabe-/Ausgabevorrichtung zeigt; und
Fig. 3 eine Eingabe-/Ausgabevorrichtung zeigt.

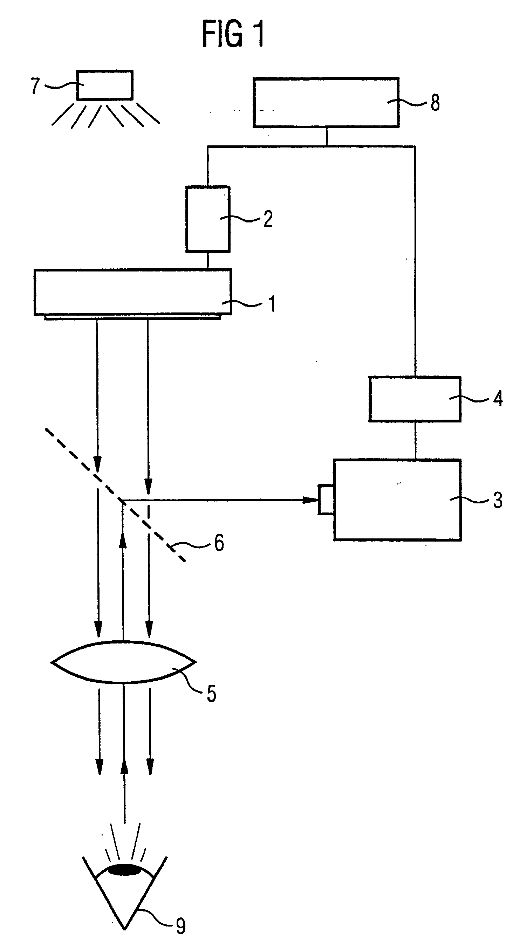

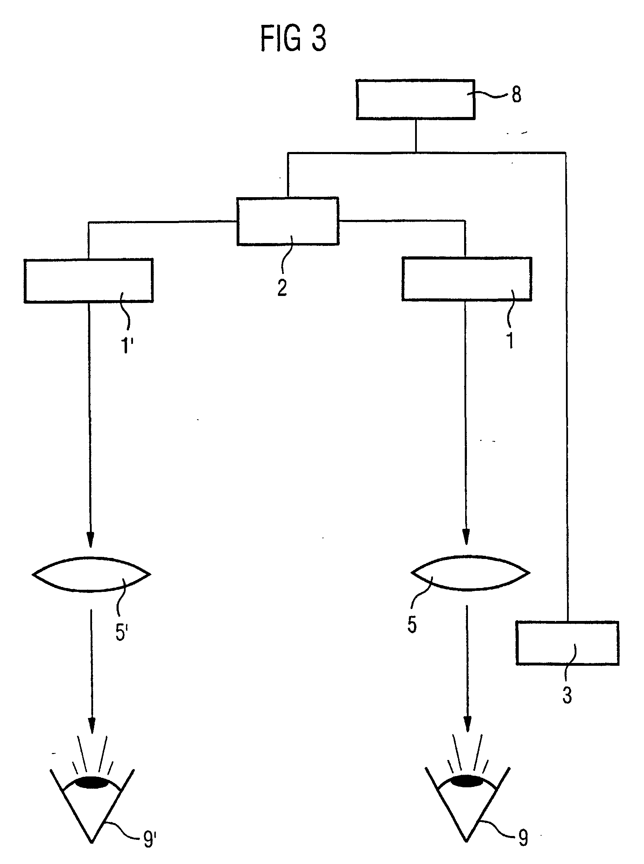

Die Figuren 1 und 3 und die dazugehörige Beschreibung dienen der näheren Erläuterung des erfindungsgemäßen Ausführungsbeispiels gemäß Figur 2.

Die in Fig. 1 schematisch in Form eines Blockschaltbildes dargestellte Eingabe-/Ausgabevorrichtung wird zunächst erläutert.

Ein Benutzerendgerät 8 wie etwa ein Mobiltelefon, ein tragbarer Computer oder auch eine Spielkonsole ist über eine Ansteuereinrichtung 2 mit einer Anzeigeeinrichtung 1 wie etwa einem LCD-Bildschirm oder einem sogenannten Mikrodisplay aus Halbleitermaterial verbunden. Die Ansteuereinrichtung 2 dient der Ansteuerung des Bildschirms 1. Weiterhin sind Endgerät 8 und Ansteuereinrichtung 2. über eine Signalverarbeitungsschaltung, vorzugsweise eine digitale Signalverarbeitungsschaltung 4, mit einem Augensensor 3 verbunden. In geeignetem Abstand von der Anzeigevorrichtung 1 ist ein optisches Element 5 wie eine Einzellinse oder eine Linsenanordnung angebracht, um den Betrachtungswinkel des von der Anzeigevorrichtung angezeigten Bildes für den Benutzer oder Betrachter aufzuweiten. Das Auge des Benutzers ist schematisch dargestellt und mit Bezugszeichen 9 bezeichnet.

Im Strahlengang zwischen Bildschirm 1 und Linse 5 ist ein Strahlteiler 6 angebracht, der einen von dem Auge 9 kommenden Lichtstrahl in den Augensensor 3 abtrennt. Bei dem Augensensor kann es sich dabei um eine CMOS-Kamera oder eine CCD-Kamera handeln. Vorzugsweise ist der Augensensor 3 empfindlich für Infrarotlicht, das schärfere Kontraste der Augenkontur des Benutzers sichtbar machen kann.

Der Augensensor 3 erfasst die Bewegungen des Benutzerauges 9 und steuert über die Signalverarbeitungsschaltung 4 und die Ansteuereinrichtung 2 das Endgerät 8 und den Bildschirm 1. So kann durch geeignete Augenbewegungen ein automatisches Rollen des Bildschirms beispielsweise beim Lesen eines Textes auf dem Bildschirm 1 veranlasst werden. Durch Fixierung eines bestimmten Bereiches auf dem Bildschirm durch die Augen kann beispielsweise ein Bildschirmfenster geöffnet oder ein Menüpunkt ausgewählt werden. So kann der Benutzer das Endgerät 8 intuitiv und auf einfache Art und Weise bedienen, ohne die Hände benutzen zu müssen.

Die in Fig. 1 gezeigte Eingabe-/Ausgabevorrichtung weist einen transmittierenden Bildschirm 1 auf, der von einer hinter dem Bildschirm angeordneten Beleuchtungseinrichtung 7 beleuchtet wird. Es ist jedoch auch denkbar, den Bildschirm mittels Tageslicht zu beleuchten. Es kann ein Helligkeitssensor vorgesehen sein, der die Bildschirmbeleuchtung in Abhängigkeit von der erfassten Helligkeit steuert.

Fig. 2 zeigt ein Ausführungsbeispiel der erfindungsgemäßen Eingabe-/Ausgabevorrichtung. Im Unterschied zu der in Fig. 1 dargestellten Eingabe-/Ausgabevorrichtung ist zusätzlich eine Infrarotquelle 10 vorgesehen, die Infrarotlicht über einen zweiten Strahlteiler 11 in den optischen Strahlengang der Eingabe-/Ausgabevorrichtung einkoppelt und so das Auge 9 des Benutzers'mit Infrarotlicht bestrahlt. Das zurückgeworfene Infrarotlicht wird von dem ersten Strahlteiler 6 abgelenkt und dem Augensensor 3 zugeführt. Über den zweiten Strahlteiler 11 wird außerdem Licht von einer Lichtquelle 12 eingekoppelt, das den Bildschirm 1 beleuchtet, der in dem in Fig. 2 dargestellten Ausführungsbeispiel ein reflektierender Bildschirm ist. Die Bildschirm- und Endgerätansteuerung mittels Augenbewegung funktioniert auf die gleiche Art und Weise wie bei der Eingabe-/Ausgabevorrichtung von Fig. 1.

Fig. 3 zeigt eine Eingabe-/Ausgabevorirchtung, bei der zwei Bildschirme 1, 1' und zwei Linsen 5, 5' vorgesehen sind, die beispielsweise auf einem brillenförmigen Trägergestell angeordnet sind, welches der Benutzer z. B. beim Spielen eines Computerspiels trägt. Bei dem Augensensor 3 kann es sich um eine einfachere Variante des Augensensors handeln, bei der beispielsweise die horizontale Augenposition mittels einer Kette von lichtempfindlichen Dioden erfasst wird. Es können selbstverständlich auch zwei Augensensoren zur Erfassung der Bewegung beider Augen des Benutzers vorhanden sein. Dadurchwird es möglich, etwa die Fokussierungstiefe des Benutzers festzustellen und in Abhängigkeit davon beispielsweise ein virtuelles Bild auf dem Bildschirm in Nah- oder Fernansicht darzustellen. Mittels des Bildschirmpaares 1, 1' wird es möglich, dreidimensional erscheinende Bilder darzustellen. Dies ist wiederum für Spiele- oder sogenannte Virtuell-Realität-Anwendungen von Interesse. Die Bildschirmsteuerung 2 kann dabei so ausgebildet sein, dass beispielsweise ein nach links gerichteter Blick des Benutzers, der von dem Augensensor 3-erfasst wird, eine entsprechend nach links gewendete Bildschirmdarstellung veranlasst.

Weitere Ausbildungen und Anwendungen der erfindungsgemäßen Eingabe-/Ausgabevorrichtung sind möglich.

Die Eingabe-/Ausgabevorrichtung kann in einen Stromsparmodus umschalten, wenn der Augensensor 3 für eine festgelegte Zeitspanne kein Auge eines Benutzers erfasst. Dies ist insbesondere für mobile Anwendungen, bei denen der Strombedarf kritisch ist, vorteilhaft.

Es ist weiterhin möglich, durch den in dem Ausführungsbeispiel von Fig. 2 gezeigten Augensensor eine Drehung oder Torsion des Auges 9 zu erfassen. Dadurch wird ein weiterer Freiheitsgrad der Eingabe ermöglicht, der beispielsweise die Gerätebedienung durch behinderte Personen erleichtern kann.

Durch den Augensensor 3 und die Verarbeitungsschaltung 4 können bestimmte Bewegungsmuster der Augenbewegung erfaßt werden, um beispielsweise eine Ermüdung des Benutzers festzustellen, bestimmte Bildschirmteile, beispielsweise Textabschnitte, bei denen das Auge des Benutzers besonders lange verweilt, können hervorgehoben oder Zusatzinformationen dazu angezeigt werden. So kann auch ein Trainingsprogramm zum Schnellesen implementiert werden.

Eine weitere Anwendung liegt darin, durch den Augensensor und die Signalerfassung eine biometrische Identifikation des Benutzers anhand des Augenmusters auszuführen. Dies ist insbesondere vorteilhaft bei Geräten, die durch mehrere Benutzer verwendet werden, oder auch bei Mobiltelefonen oder dergleichen als Ersatz für die PIN-Karte. Eine weitere Anwendung liegt darin, eine horizontale oder vertikale Anordnung des Bildschirms relativ zum Benutzer mittels der erfassten Augen-Position zu ermitteln.

## Patentansprüche

1. Eingabe-/Ausgabevorrichtung für ein Benutzerendgerät (8), umfassend:
- eine Anzeigeeinrichtung (1),
- einen als Infrarotsensor ausgebildeten Augensensor (3) zur Erfassung von Augenbewegungen eines Benutzers,
- eine Ansteuereinrichtung (2, 4) zur Ansteuerung des Benutzerendgerätes (8) und/oder der Anzeigeeinrichtung (1) in Abhängigkeit von der durch den Augensensor (3) erfaßten Augenbewegung,
- eine Infrarotquelle (10) zur Beleuchtung wenigstens eines Auges (9) des Benutzers mit Infrarotlicht,
- einen ersten Strahlteiler (6) zur Abtrennung eines vom Auge kommenden Lichtstrahls und
- einen zweiten Strahlteiler (11) zur Einkopplung des Infrarotlichts von der Infrarotquelle in den Strahlengang zwischen Anzeigeeinrichtung (1) und Auge (9),
**dadurch gekennzeichnet,**
**daß** der erste Strahlteiler (6) und der zweite Strahlteiler (11) innerhalb des Strahlengangs derart angeordnet sind, daß der vom Auge (9) kommende abzutrennende Lichtstrahl vor Erreichen des Augensensors (3) lediglich einen Strahlteiler (6) passiert.

2. Eingabe-/Ausgabevorrichtung nach Anspruch 1,
**gekennzeichnet durch**
ein zwischen Anzeigeeinrichtung (1) und dem Auge (9) des Benutzers angeordnetes optisches Element (5), vorzugsweise eine Linsenanordnung.

3. Eingabe-/Ausgabevorrichtung nach Anspruch 1 oder 2,
**gekennzeichnet durch**
eine mit dem Augensensor (3) verbundene Signalverarbeitungsschaltung (4).

4. Eingabe-/Ausgabevorrichtung nach einem der Ansprüche 1-3,
**dadurch gekennzeichnet,**
**daß** der Augensensor (3) eine CCD-Kamera ist.

5. Eingabe-/Ausgabevorrichtung nach einem der Ansprüche 1-3,
**dadurch gekennzeichnet,**
**daß** der Augensensor (3) eine CMOS-Kamera mit integrierter Signalverarbeitungsschaltung ist.

6. Eingabe-/Ausgabevorrichtung nach einem der Ansprüche 1-5,
**dadurch gekennzeichnet,**
**daß** die Anzeigeeinrichtung (1) zwei getrennte Bildschirme (1, 1') mit zwei optischen Elementen (5, 5') zur Erzeugung von getrennten Bildern für beide Augen (9, 9') des Benutzers aufweist.

7. Eingabe-/Ausgabevorrichtung nach Anspruch 6,
**dadurch gekennzeichnet,**
**daß** die Ansteuereinrichtung (2) die beiden Bildschirme (1, 1') ansteuert, um voneinander verschiedene Bilder zur Erzeugung einer dreidimensional erscheinenden Darstellung anzuzeigen.

8. Eingabe-/Ausgabevorrichtung nach Anspruch 6 oder 7,
**gekennzeichnet durch**
ein Paar von Augensensoren (3) zur Erfassung der Bewegung beider Augen (9, 9') des Benutzers.

9. Eingabe-/Ausgabevorrichtung nach Anspruch 8,
**gekennzeichnet durch**
eine Einrichtung (4) zur Erfassung einer Fokussierungstiefe der Augen (9, 9') des Benutzers.

10. Eingabe-/Ausgabevorrichtung nach einem der Ansprüche 6 bis 9,
**gekennzeichnet durch**
ein brillenartiges Trägergestell für Anzeigeeinrichtung (1, 1'), Augensensoren (3, 3') und optische Elemente (5, 5').

11. Eingabe-/Ausgabevorrichtung nach einem der Ansprüche 1 bis 10,
**gekennzeichnet durch**
eine Schnittstelle zur drahtlosen Datenübertragung mit dem Benutzerendgerät (8).

12. Eingabe-/Ausgabevorrichtung nach einem der Ansprüche 1 bis 11,
**dadurch gekennzeichnet,**
**daß** die Anzeigeeinrichtung (1) ein reflektierender Bildschirm ist und daß eine Lichtquelle (12) zur Beleuchtung der Anzeigeeinrichtung (1) von vorne her vorgesehen ist.

13. Eingabe-/Ausgabevorrichtung nach Anspruch 12,
**dadurch gekennzeichnet,**
**daß** das Licht von der Lichtquelle (12) mittels des zweiten Strahlteilers (11) in den Strahlengang eingekoppelt wird.

14. Eingabe-/Ausgabevorrichtung nach einem der Ansprüche 1 bis 11,
**dadurch gekennzeichnet,**
**daß** die Anzeigevorrichtung (1) ein transmittierender Bildschirm ist und daß eine Lichtquelle (7) vom Betrachter aus gesehen hinter dem Bildschirm (1) vorgesehen ist.

15. Eingabe-/Ausgabevorrichtung nach einem der Ansprüche 1 bis 14,
**dadurch gekennzeichnet,**
**daß** die Vorrichtung in einen Stromsparmodus umschaltet, wenn der Augensensor (3) für eine festgelegte Zeitspanne kein Benutzerauge (9) erfaßt.

16. Eingabe-/Ausgabevorrichtung nach einem der Ansprüche 1 bis 15,
**dadurch gekennzeichnet,**
**daß** der Augensensor (3) ausgebildet ist, eine Drehung (Torsion) des Auges (9) zu erfassen.

17. Eingabe-/Ausgabevorrichtung nach einem der Ansprüche 1 bis 16,
**dadurch gekennzeichnet,**
**daß** die Ansteuereinrichtung (2) ausgebildet ist, bei Erfassung einer bestimmten gleichmäßigen Augenbewegung durch den Augensensor (3) einen dieser Augenbewegung angepaßten Bildschirmrollvorgang zu bewirken.

18. Eingabe-/Ausgabevorrichtung nach einem der Ansprüche 1 bis 17,
**dadurch gekennzeichnet,**
**daß** der Augensensor (3) und die Signalverarbeitungseinrichtung (4) ausgebildet sind, bestimmte Bewegungsmuster der Augenbewegung des Benutzers zu erfassen und zu speichern.

19. Eingabe-/Ausgabevorrichtung nach einem der Ansprüche 1 bis 18,
**dadurch gekennzeichnet,**
**daß** die Ansteuereinrichtung (2) ausgebildet ist, festgelegte Prgrammfunktionen eines auf dem Benutzerendgerät (8) lauffähigen Softwareprogrammes in Abhängigkeit von einer durch den Augensensor (3) erfaßten Augenbewegung des Benutzers zu aktivieren.

20. Eingabe-/Ausgabevorrichtung nach einem der Ansprüche 1 bis 19,
**gekennzeichnet durch**
eine Benutzeridentifikationseinrichtung (4) zur Identifikation eines Benutzers anhand eines von dem Augensensor (3) erfaßten Augenmusters.

21. Eingabe-/Ausgabevorrichtung nach einem der Ansprüche 1 bis 20,
**gekennzeichnet durch**
eine Einrichtung (4) zur Erfassung einer horizontalen oder vertikalen Anordnung der Anzeigevorrichtung relativ zum Benutzer aufgrund der **durch** den Augensensor (3) erfaßten Augenposition.

## Claims

1. Input/output apparatus for a user terminal (8), comprising:
- a display device (1),
- an eye sensor (3) designed as an infrared sensor and serving for detecting eye movements of a user,
- a drive device (2, 4) for driving the user terminal (8) and/or the display device (1) in a manner dependent on the eye movement detected by the eye sensor (3),
- an infrared source (10) for illuminating at least one eye (9) of the user with infrared light,
- a first beam splitter (6) for splitting off a light beam coming from the eye, and
- a second beam splitter (11) for coupling the infrared light from the infrared source into the beam path between display device (1) and eye (9),
**characterized**
**in that** the first beam splitter (6) and the second beam splitter (11) are arranged within the beam path in such a way that the light beam that comes from the eye (9) and is to be split off passes through only one beam splitter (6) before reaching the eye sensor (3).

2. Input/output apparatus according to Claim 1,
**characterized by**
an optical element (5), preferably a lens arrangement, arranged between display device (1) and the eye (9) of the user.

3. Input/output apparatus according to Claim 1 or 2,
**characterized by**
a signal processing circuit (4) connected to the eye sensor (3).

4. Input/output apparatus according to one of Claims 1-3,
**characterized**
**in that** the eye sensor (3) is a CCD camera.

5. Input/output apparatus according to one of Claims 1-3,
**characterized**
**in that** the eye sensor (3) is a CMOS camera with an integrated signal processing circuit.

6. Input/output apparatus according to one of Claims 1-5,
**characterized**
**in that** the display device (1) has two separate screens (1, 1') with two optical elements (5, 5') for generating separate images for both eyes (9, 9') of the user.

7. Input/output apparatus according to Claim 6,
**characterized**
**in that** the drive device (2) drives the two screens (1, 1') to display mutually different images for generating a representation with a three-dimensional appearance.

8. Input/output apparatus according to Claim 6 or 7,
**characterized by**
a pair of eye sensors (3) for detecting the movement of both eyes (9, 9') of the user.

9. Input/output apparatus according to Claim 8,
**characterized by**
a device (4) for detecting a focussing depth of the eyes (9, 9') of the user.

10. Input/output apparatus according to one of Claims 6 to 9,
**characterized by**
a spectacles-like carrier frame for display device (1, 1'), eye sensors (3, 3') and optical elements (5, 5').

11. Input/output apparatus according to one of Claims 1 to 10,
**characterized by**
an interface for wire-free data transmission with the user terminal (8).

12. Input/output apparatus according to one of Claims 1 to 11,
**characterized**
**in that** the display device (1) is a reflective screen, and in that a light source (12) for illuminating the display device (1) from the front is provided.

13. Input/output apparatus according to Claim 12,
**characterized**
**in that** the light from the light source (12) is coupled into the beam path by means of the second beam splitter (11).

14. Input/output apparatus according to one of Claims 1 to 11,
**characterized**
**in that** the display device (1) is a transmissive screen, and in that a light source (7) is provided behind the screen (1), as seen from the observer.

15. Input/output apparatus according to one of Claims 1 to 14,
**characterized**
**in that** the apparatus switches to a power-saving mode if the eye sensor (3) detects no user eye (9) for a defined period of time.

16. Input/output apparatus according to one of Claims 1 to 15,
**characterized**
**in that** the eye sensor (3) is designed to detect a turning (torsion) of the eye (9).

17. Input/output apparatus according to one of Claims 1 to 16,
**characterized**
**in that** the drive device (2) is designed, upon detection of a specific uniform eye movement by the eye sensor (3), to effect a screen scrolling operation matching this eye movement.

18. Input/output apparatus according to one of Claims 1 to 17,
**characterized**
**in that** the eye sensor (3) and the signal processing device (4) are designed to detect and store specific movement patterns of the eye movement of the user.

19. Input/output apparatus according to one of Claims 1 to 18,
**characterized**
**in that** the drive device (2) is designed to activate defined program functions of a software program, which can be executed on the user terminal (8), in a manner dependent on an eye movement of the user detected by the eye sensor (3).

20. Input/output apparatus according to one of Claims 1 to 19,
**characterized by**
a user identification device (4) for identifying a user on the basis of an eye pattern detected by the eye sensor (3).

21. Input/output apparatus according to one of Claims 1 to 20,
**characterized by**
a device (4) for detecting a horizontal or vertical arrangement of the display device relative to the user on the basis of the eye position detected by the eye sensor (3).

## Revendications

1. Dispositif d'entrée / sortie pour un terminal utilisateur (8), comprenant:
- un dispositif d'affichage (1),
- un capteur oculaire (3) réalisé comme capteur infrarouge pour le captage des mouvements oculaires d'un utilisateur,
- un dispositif de commande (2, 4) pour commander le terminal utilisateur (8) et/ou le dispositif d'affichage (1) en fonction du mouvement oculaire capté par le capteur oculaire (3),
- une source infrarouge (10) pour éclairer au moins un oeil (9) de l'utilisateur avec la lumière infrarouge,
- un premier séparateur de faisceau (6) pour séparer un faisceau lumineux venant de l'oeil et
- un second séparateur de faisceau (11) pour coupler la lumière infrarouge provenant de la source de lumière infrarouge dans la marche du faisceau entre le dispositif d'affichage (1) et l'oeil (9),
**caractérisé en ce que**
le premier séparateur de faisceau (6) et le deuxième séparateur de faisceau (11) sont agencés dans la marche du faisceau de manière que le faisceau lumineux venant de l'oeil (9), et qu'il s'agit de séparer, passe par un seul séparateur de faisceau (6) avant d'atteindre le capteur oculaire (3).

2. Dispositif d'entrée / sortie selon la revendication 1,
**caractérisé par**
un élément optique (5), qui sera de préférence en agencement de lentilles, placé entre le dispositif d'affichage (1) et l'oeil (9) de l'utilisateur.

3. Dispositif d'entrée / sortie selon la revendication 1 ou 2,
**caractérisé par**
un circuit de traitement de signaux (4) connecté au capteur oculaire (3).

4. Dispositif d'entrée / sortie selon l'une des revendications 1 à 3,
**caractérisé en ce que**
le capteur oculaire (3) est une caméra CCD.

5. Dispositif d'entrée / sortie selon l'une des revendications 1 à 3,
**caractérisé en ce que**
le capteur oculaire (3) est une caméra CMOS avec circuit de traitement de signaux intégré.

6. Dispositif d'entrée / sortie selon l'une des revendications 1 à 5,
**caractérisé en ce que**
le dispositif d'affichage (1) présente deux écrans séparés (1, 1') avec deux éléments optiques (5, 5') pour produire des images séparées pour les deux yeux (9, 9') de l'utilisateur.

7. Dispositif d'entrée / sortie selon la revendication 6,
**caractérisé en ce que**
le dispositif de commande (2) commande les deux écrans (1, 1') pour afficher des images différentes l'une de l'autre pour produire une représentation en trois dimensions.

8. Dispositif d'entrée / sortie selon l'une des revendications 6 ou 7,
**caractérisé par**
une paire de capteurs oculaires (3) pour capter le mouvement des deux yeux (9, 9') de l'utilisateur.

9. Dispositif d'entrée / sortie selon la revendication 8,
**caractérisé par**
un dispositif (4) pour capter une profondeur de focalisation des yeux (9, 9') de l'utilisateur.

10. Dispositif d'entrée / sortie selon l'une des revendications 6 à 9,
**caractérisé par**
une monture en forme de lunettes pour le dispositif d'affichage (1, 1'), les capteurs oculaires (3, 3') et les éléments optiques (5, 5').

11. Dispositif d'entrée / sortie selon l'une des revendications 1 à 10,
**caractérisé par**
une interface pour la transmission sans fil de données au terminal utilisateur (8).

12. Dispositif d'entrée / sortie selon l'une des revendications 1 à 11,
**caractérisé en ce que**
le dispositif d'affichage (1) est un écran réfléchissant et **en ce qu'**une source de lumière (12) est prévue pour éclairer par devant le dispositif d'affichage (1).

13. Dispositif d'entrée / sortie selon la revendication 12,
**caractérisé en ce que**
la lumière émise par la source de lumière (12) est couplée dans la marche du faisceau au moyen du deuxième séparateur de faisceau (11).

14. Dispositif d'entrée / sortie selon l'une des revendications 1 à 11,
**caractérisé en ce que**
le dispositif d'affichage (1) est un écran transmetteur et **en ce qu'**est prévue une source de lumière (7) placée derrière l'écran (1), du point de vue de l'observateur.

15. Dispositif d'entrée / sortie selon l'une des revendications 1 à 14,
**caractérisé en ce que**
le dispositif se met en mode économique lorsque le capteur oculaire (3) n'est pas excité par l'oeil d'un utilisateur (9) pendant un laps de temps déterminé.

16. Dispositif d'entrée / sortie selon l'une des revendications 1 à 15,
**caractérisé en ce que**
le capteur oculaire (3) est réalisé de manière à capter une rotation (torsion) de l'oeil (9).

17. Dispositif d'entrée / sortie selon l'une des revendications 1 à 16,
**caractérisé en ce que**
le dispositif de commande (2) est réalisé de manière à provoquer, lors du captage d'un certain mouvement oculaire régulier par le capteur oculaire (3), un défilement à l'écran adapté audit mouvement de l'oeil.

18. Dispositif d'entrée / sortie selon l'une des revendications 1 à 17,
**caractérisé en ce que**
le capteur oculaire (3) et le dispositif de traitement de signaux (4) sont réalisés de manière à capter certains schémas de mouvement produits par le mouvement de l'oeil de l'utilisateur et à les mettre en mémoire.

19. Dispositif d'entrée / sortie selon l'une des revendications 1 à 18,
**caractérisé en ce que**
le dispositif de commande (2) est réalisé de manière à activer, en fonction d'un mouvement de l'oeil de l'utilisateur capté par le capteur oculaire (3), des fonctions de programmes déterminées d'un logiciel opérationnel sur le terminal utilisateur (8).

20. Dispositif d'entrée / sortie selon l'une des revendications 1 à 19,
**caractérisé par**
un dispositif d'identification de l'utilisateur (4) pour identifier un utilisateur sur base d'un schéma de l'oeil capté par le capteur oculaire (3).

21. Dispositif d'entrée / sortie selon l'une des revendications 1 à 20,
**caractérisé par**
un dispositif (4) pour déterminer une position horizontale ou verticale du dispositif d'affichage par rapport à l'utilisateur sur base de la position oculaire captée par le capteur oculaire (3).
